# EUROPEAN PATENT SPECIFICATION

(11) **EP 1 981 332 B1**
(45) Date of publication and mention of the grant of the patent: **15.02.2012**
(21) Application number: 05809126.5
(22) Date of filing: 02.12.2005
(51) Int. Cl.: A01K 27/00

(54) **ANIMAL LEADS**
TIERLEINEN
LAISSES POUR ANIMAUX

(43) Date of publication of application: 22.10.2008
(73) Proprietor: Flexguard AG, 4665 Oftringen (CH)
(72) Inventor: MEISE, Armin, 4805 Brittnau (CH)
(74) Representative: Wüstefeld, Regine Marie
(86) International application number: PCT/IB2005/003649
(87) International publication number: WO 2007/063354

(56) References cited:
- WO-A-95/31895
- WO-A-2004/002219
- DE-A1- 2 402 614
- GB-A- 2 114 864
- GB-A- 2 264 219
- US-A- 5 706 764
- US-A- 5 873 328
- US-A- 5 915 336

## Description

### FIELD OF INVENTION

This invention relates to an animal lead. In particular this invention relates to a dog lead.

### BACKGROUND TO THE INVENTION

Animal leads for dogs which have elastic cushioning elements which at least partially absorb jolts and impacts exerted by a dog on the animal lead, reduce the risk of injury to both the dog and the person walking the dog. If, for example, the dog suddenly jumps up or abruptly comes to a halt, the lead is subjected to a sudden jolt which can result in older or weaker persons being pulled over or result in injury to the person. Such a jolt can also result in injury to the dog, especially to the dog's throat area. Such jolts or impacts also increase the risk of the dog lead becoming damaged by for example, tearing, thereby shortening the serviceable life of the dog lead.

In order to overcome the abovementioned problems, it is known to incorporate a cushioning element in the dog lead to cushion such jolts or impacts. An animal lead of this type is disclosed in DT 24 02 614, in which the cushioning element is in the form of a pressure spring, specifically a rubber spring.

US 5,915,336 A relates to an animal leash. An animal leash has a strap with a fastener at one end for coupling the leash to an animal restraint and a handle at the other end for holding the leash. The strap includes a non-stretchable length of flexible material and a length of elastically stretchable webbing. The elastically stretchable section of the strap yields elastically when tensioned, to provide a more gradual application of the load and to moderate the jerk felt by those attached to both ends of the leash. The leash may include a rigid tube surrounding the length of elastically stretchable webbing and an adjacent portion of the non-stretchable webbing. The tube is secured to the second end of the length of elastically stretchable webbing. In this case, the stretchable component is housed in the rigid tube, which serves as a handle as well as a protective cover. A wrist strap may be fastened to the end of the tube.

GB 2 264 219 A relates to a dog restraint system. An elastic dog leash comprises an elastic material an outer sheath. The leash also can also include energy absorbing devices which significantly reduce the impulse force caused when the dog makes a sudden movement. A second handle attached part way along the leash offers short leash control when necessary. An associated problem experienced with long leashes is that they have a tendency to become tangled with the dogs legs. The invention described can be extended to include elasticated harnesses which position the leash above the dogs body such that the leash is less likely to become tangled with the animals legs.

Other examples of animal leads of the aforementioned kind are known from US 5 706 764, US 5 873 328, GB 2 114 864 A or WO 95/31895. Where the cushioning elements are in the form of a rubber bar, for example, the cushioning elements are fully exposed. In as far as the cushioning element is in the form of a tension spring, for example, the cushioning element may be located in a metal sleeve which can cause damage to the cushioning element or cause injury to the animal.

Dogs, particularly younger or playful animals, often repeatedly bite into the lead and as a consequence, into the cushioning element, which is normally situated close to the animal's collar. If the cushioning element is not protected, it is possible that the cushioning element concerned can become weakened or damaged over an extended period of use.

The invention is therefore based on providing an animal lead of the aforementioned kind which is easier to use, better protected, and which has a longer serviceable life.

### SUMMARY OF THE INVENTION

It is a general object of the present invention to provide an improved and useful animal lead in which the above-mentioned problems are eliminated.

In order to achieve the above-mentioned object, there is provided an animal lead according to claim 1.

Advantageous embodiments are defined by the dependent claims.

Advantageously, a cushioning element is surrounded by a protective sleeve in the form of a chewing band. Such a protective sleeve has a dual purpose. On the one hand, it serves to protect the cushioning element from damaging environmental factors and on the other, it allows the dog to bite into the protective sleeve without damaging the cushioning element. The animal is thus unable to injure itself and the cushioning element does not become weakened or damaged over an extended period of use.

Advantageously, the chewing band is of a flexible, bite resistant material, preferably a stretchable plastic braid. It is both sufficiently flexible and has sufficient strength, especially toughness, so that the animal cannot bite through it.

Advantageously, the cushioning element is completely surrounded by the protective sleeve when it is not being subjected to a tensile force. This means that the cushioning element is fully protected when not subjected to a tensile force. It cannot accidentally get caught on protrusions or hooks and is also not subjected to damaging weather conditions.

By an especially preferred design, the protective sleeve is connected to the cushioning element at its ends in such a way that it can be detached. This enables existing cushioning elements to be retrofitted with the protective sleeve, resulting in an animal lead. This also enables one and the same protective sleeve to be attached to various cushioning elements. The animal lead, can therefore be adapted to numerous uses and situations. For example, if the animal is younger, the protective sleeve can be fitted to a cushioning element which is shorter or which has a smaller circumference. When the animal has become older and is stronger, the last-mentioned cushioning element can be replaced with a stronger cushioning element. As such, the protective sleeve can be converted from the one cushioning element to the other cushioning element.

Advantageously, the cushioning element is in the form of an elastic rubber bar which is preferably in the form of a rubber rope and which is connected to other components of the animal lead in such a way that it can be detached. Such a rubber bar is relatively light, is of a simple design, safe to use and can be inexpensively manufactured. As has already been referred to, the possibility of detaching the cushioning element enables the invented parts to be retrofitted to any kind of animal lead whatsoever. Conventional animal leads are thus capable of being converted to above-mentioned leads.

The animal lead includes two attachment lugs which are each fixed to a different one of the ends of the rubber bar.

The animal lead has eye formations in the form of shackles connected to the ends of the cushioning element via the attachment lugs, for the connection of connection elements, preferably spring snap hooks. Such shackles enable the connection elements to be connected to the cushioning element via the attachment lugs whilst at the same time enabling the cushioning element to be changed without difficulty.

Avantageously, the animal lead is in the form of a so-called retractable lead retainer configured in such a way that the cushioning element and protective sleeve are within the retainer when the lead has been retracted. This means that the cushioning element and protective sleeve are well-protected if they are not in use or if the cushioning element and protective sleeve are not subjected to a tensile force, this having a beneficial effect on the serviceable life of these parts and on the serviceable life of the animal lead.

Avantageously, the animal lead is in the form of a collar for an animal. This has the advantage that the animal does not suffer from injuries to the throat region when suddenly subjected to jolts or impacts, as the collar is of an elastic cushioning material. With this animal lead therefore, impact forces acting on the animal are cushioned.

Avantageously, the cushioning element and protective sleeve form eye formations in the form of loops at their ends for the attachment of connection elements. Examples of the latter could be spring snap hooks or rings in which the spring snap hook can be hooked in a detachable manner. This means that the collar can easily be taken off the animal for example, or joined to other leads or bands. In the case of an animal lead in the form of a collar, the protective sleeve as a chewing protection can not only protect the cushioning element, but especially the animal's body when the cushioning element contracts after stretching which would possibly result in the animal's fur becoming painfully pinched for example, were it not for the protective sleeve.

### BRIEF DESCRIPTION OF THE DRAWINGS

Further features of the invention are described hereinafter by way of a nonlimiting example of the invention, with reference to and as illustrated in the accompanying diagrammatic drawings. In the drawings:
Figure 1 shows a diagrammatic partially sectional side view of an animal lead in accordance with the invention;
Figure 2 shows a diagrammatic partially sectional side view of the animal lead of Figure 1, in a stretched condition;
Figure 3 shows a diagrammatic partially sectional side view of an animal lead with a retractable lead retainer; and
Figure 4 shows a diagrammatic top view of an animal lead in the form of an animal collar.

### DESCRIPTION OF THE PREFERRED EMBODIMENTS

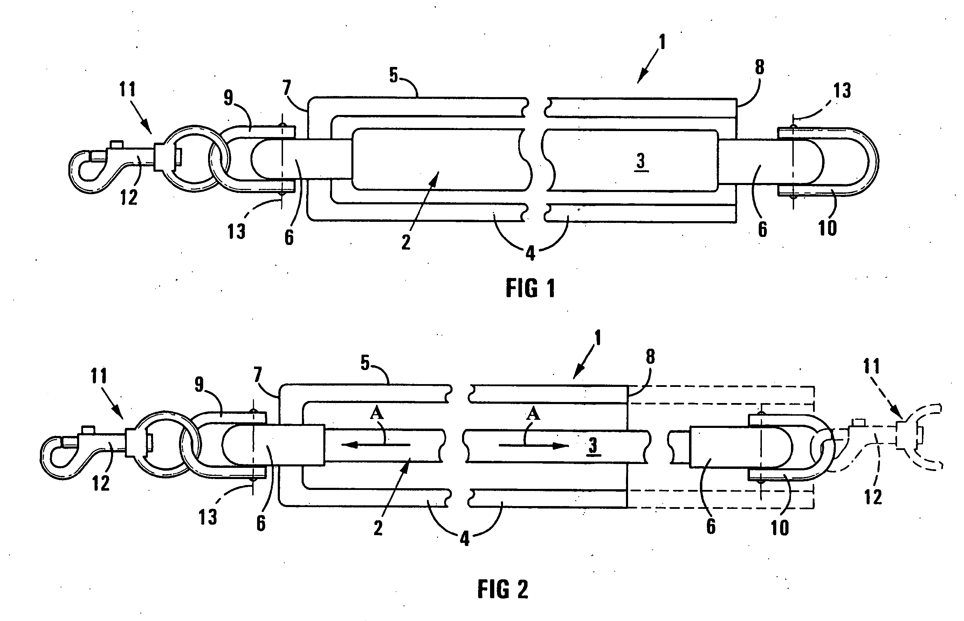

With reference to Fig 1 of the drawings, an animal lead, especially a dog lead is designated generally by reference numeral 1. In Fig 1, the section markings which are used to indicate a section have not been included for the sake of clarity.

The animal lead 1 includes an elastic cushioning element 2 which at least partially absorbs jolts. The cushioning element 2 is in the form of an elongate and resiliently deformable rubber bar 3 having a predetermined length and diameter. The rubber bar 3 is in the form of an elastic rope. The rubber bar 3 has a generally cylindrical configuration. The animal lead 1 includes two attachment lugs 6 which are each fixed to a different end of the rubber bar 3.

The animal lead 1 includes a protective sleeve 5 in the form of a chewing band which surrounds the rubber bar 3. In accordance with a preferred embodiment of the invention, the protective sleeve 5 is manufactured from an elastic, bite-resistant material, preferably a stretchable plastic braid. As shown in Fig. 1, the rubber bar 3 is completely surrounded by the protective sleeve 5 when the rubber bar 3 is in a relaxed unstressed condition. The term "chewing band" should be interpreted sufficiently wide to include all types of band and also includes a band which is in the form of braiding. Such a band can therefore comprise numerous partial bands which are joined to each other, and more particularly which are interlaced.

As shown in Figs 1 and 2, one end 7 (this being the left end in Figures 1 and 2) of the protective sleeve 5 is releasably connected to the left attachment lug 6. The end 7 of the protective sleeve can for example, be fixed to the attachment lug 6 by means of an interlocking thread (not shown). The other end 8 (this being the right end in Figs 1 and 2 of the protective sleeve 5) of the protective sleeve 5 is open and is not connected to the right attachment lug 6.

In accordance with another embodiment (not shown), the protective sleeve 5 is connected to the attachment lugs 6 at both ends 7, 8 of the rubber bar 3. Preferably, in this embodiment, the protective sleeve 5 is releasably connected to the attachment lugs 6 at both ends.

As is diagrammatically indicated in Figs. 1 and 2, the cushioning element 2 is preferably attached to additional parts of the lead. For this purpose, the animal lead includes eye formations in the form of shackles 9, 10 which are each connected to a different one of the attachment lugs 6. The shackles 9, 10 permit the attachment of connection elements 11, in the form of spring snap hooks 12.

As indicated in Figs. 1 and 2, each of the shackles 9, 10 is U-shaped and each is connected to one of the left and right attachment lugs 6 via a screw or a pin 13 which is received in a hole provided therefore in each attachment lug 6.

In use, one of the connection elements 11 is releasably attached to the animal's collar (which is not shown) by, for example, hooking the snap hooks 12 on to the collar. The other end of the animal lead 1 is then attached to a conventional lead (not shown), this also being preferably by means of a connection element such as the spring snap hook 12. In use, the attached end 7 of the protective sleeve 5 is proximate the animal's collar. It is however possible in a different arrangement that the other end 8 of the protective sleeve 5 is proximate the animal's collar. The latter arrangement has the advantage that the protective sleeve 5 does not fill with rainwater if the dog is taken for a walk in rain.

In the case of the dog suddenly lurching, for example, the rubber bar 3 is subjected to a tensile force, indicated by arrow A in Fig. 2, resulting in the rubber bar 3 being stretched. This results in the right end of the rubber bar 3 protruding from the protective sleeve 5, as indicated in Fig. 2. Furthermore, the diameter of the rubber bar 3 is reduced when the tensile force A is applied to it. It should be understood that this diameter reduction in Figure 2 is merely for visual purposes and is not necessarily presented to scale.

The protective sleeve 5 can, however, be of such a length that the cushioning element 2 is fully covered by the protective sleeve when subjected to tensile force. Such an embodiment is shown by the dashed line in Fig. 2. The internal diameter of the protective sleeve is preferably sufficiently large so that the shackles 9, 10 can be at least be partially located inside the protective sleeve 5.

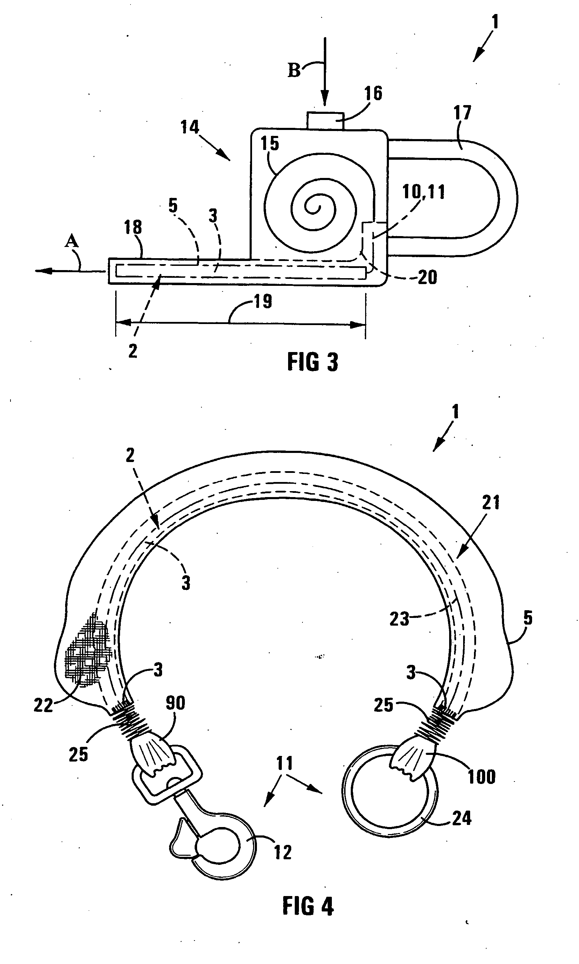

In accordance with another embodiment of the invention, illustrated in Fig.3, the invented animal lead includes a so-called retractable lead retainer 14. In this embodiment, the cushioning element 2 and protective sleeve 5 are situated inside the retainer 14 when retracted.

Such a retractable lead retainer has a torsion spring 15, diagrammatically indicated in Fig. 3. When applying tensile force A shown in Fig. 3, the torsion spring 15 is tensioned to such an extent that, when pressing a push-button 16 in the direction of arrow B, it results in a lock (not shown) being released and, the lead and rubber bar 3 being retracted into the retractable lead retainer 14 in the opposite direction to arrow A. The retractable lead retainer 14 has a hoop-shaped handle 17, which should preferably be held in such a way that the push-button 16 can be activated with the thumb.

The retractable lead retainer 14 in Fig. 3, has a protrusion 18 in its lower part, defining an internal passage, so that the lower part of the retainer has an overall length 19 shown in Fig. 3, this preferably corresponding to the length of the rubber bar 3 when not stressed. As the connection elements 11 are attached to the attachment lugs 6 via the shackles 9, 10 in a jointed manner, one of the shackles 9,10 and a spring snap hook 12 can be retracted into the retainer 14, by being deflected upwards as indicated with dotted lines in Fig. 3.

It is therefore possible to replace the cushioning element 2, (in the form of a rubber bar 3 as shown in the preferred embodiment) by disconnecting connection element 11 (in the form of a spring snap hook 12) and adapt it to a particular situation or a particular animal. For example, a short, taut rubber bar can be used when taking a dog for a walk in the city or for example, a longer rubber bar or one with an increased elasticity can be used when walking the dog in the forest or across a field. The opening and internal diameter of the protrusion 18 of the retractable lead retainer 14 should preferably be dimensioned so that the protective sleeve 5 can be retracted into the retainer.

Another form of the invention is diagrammatically shown in a top view in Fig. 4. In Fig. 4, the animal lead 1 is in the form of a collar 21 for the animal. The collar 21 includes the cushioning element 2, in the form of a rubber bar 3, and a protective sleeve 5 which is of a stretchable plastic braid material 22. The cushioning element 2 and more particularly, the rubber bar 3 being indicated in Fig. 4 by dotted lines. The cushioning element 2 has a longitudinal axis 23. The protective sleeve 5 is of plastic braid material 22 as shown at the left end of the protective sleeve 5.

As is also shown in Fig. 4, cushioning element 2 and protective sleeve 5 together form eye formations in the form of loops 90, 100 for attaching connection elements 11, in the form of a spring snap hook 12 at the left end of the collar 21 and a fastening ring 24 at the right end of the collar 21. The spring snap hook 12 can be releasably hooked onto the fastening ring 24.

The loops 90,100 are formed by folding the rubber bar 3 and the protective sleeve 5 over at their ends so as to form the loops. The loops 90, 100 are secured at their base by means of a strong adhesive tape 25 or a cord wrapped around the protective sleeves at the base of the loops.

Cushioning elements 5 of various lengths and thickness can be used. Conventional animal leads can also be retrofitted with parts of the the invented animal lead.

This invention holds the advantages of providing an animal lead which is easier to use, is especially better protected and which therefore has a longer serviceable life, wherein the protective sleeve is especially designed as a chewing band.

## Claims

1. An animal lead including a cushioning element (2) for absorbing jolts, wherein the cushioning element (2) is surrounded by a protective sleeve (5), **characterized in that** the protective sleeve (5) is a chewing band, which is of a flexible, bite resistant material and **in that** the protective sleeve (5) is of such a length that the cushioning element (2) is fully covered by the protective sleeve (5) when subjected to tensile force.

2. The animal lead as claimed in claim 1, **characterised in that** the chewing band (4) is of braided stretchable plastics material.

3. The animal lead as claimed in claim 1 or 2, **characterised in that** the cushioning element (2) is of resiliently deformable material.

4. The animal lead as claimed in any one of the preceding claims, **characterised in that** the cushioning element (2) is surrounded by the protective sleeve (5) when the cushioning element is in a relaxed condition.

5. The animal lead as claimed in any one of the preceding claims, **characterised in that** the protective sleeve (5) is releasably connected to the cushioning element (2) at one end (7) of the protective sleeve (5).

6. The animal lead as claimed in any one of the preceding claims, **characterised in that** the cushioning element (2) is in the form of a rubber bar (3).

7. The animal lead as claimed in claim 6, **characterised in that** the animal lead includes attachment lugs (6) fixed to ends of the rubber bar (3) and connection elements (11) connected to the attachment lugs (6).

8. The animal lead as claimed in claim 7, **characterised in that** the animal lead includes eye formations in the form of shackles (9, 10), which each connect one of the connection elements (11) to a different one of the lugs (6).

9. The animal lead as claimed in claim 7 or claim 8, **characterised in that** the connection elements (11) are in the form of snap hooks (12).

10. The animal lead as claimed in any one of claims 1 to 6, **characterised in that** the cushioning element (2) and protective sleeve (5) form eye formations in the form of loops (90, 100) at their ends.

11. The animal lead as claimed in any one of the preceding claims, **characterised in that** the animal lead includes a retractable lead retainer (14) configured so that the cushioning element (2) and protective sleeve (5) are received within the retainer (14) when retracted.

12. The animal lead as claimed in any one of the preceding claims, wherein the animal lead is in the form of an animal collar (21).

## Patentansprüche

1. Leine für Tiere, die ein Dämpfungselement (2) zum Aufnehmern von ruckartigen Bewegungen beeinhaltet, wobei das Dämpfungselement (2) von einer Schutzhülse (5) umgeben ist, **dadurch gekennzeichnet, dass** die Schutzhülse (5) ein Kauband ist, aus einem flexiblen, bissfesten Material, und dass die Schutzhülse (5) eine solche Länge aufweist, dass das Dämpfungselement (2) vollständig von der Schutzhülse (5) umgeben ist, wenn es einer Zugkraft unterworfen ist.

2. Leine für Tiere nach Anspruch 1, **dadurch gekennzeichnet, dass** das Kauband (4) aus einem geflochtenen, dehnbaren Kunststoffmaterial besteht.

3. Leine für Tiere nach Anspruch 1 oder 2, **dadurch gekennzeichnet, dass** das Dämpfungselement (2) aus einem elastischen, deformierbaren Material besteht.

4. Leine für Tiere nach einem der vorhergehenden Ansprüche, **dadurch gekennzeichnet, dass** das Dämpfungselement (2) von der Schutzhülse (5) umgeben ist, wenn sich Dämpfungselement (2) in einem entspannten Zustand befindet.

5. Leine für Tiere nach einem der vorhergehenden Ansprüche, **dadurch gekennzeichnet, dass** die Schutzhülse (5) an einem ihrer Enden (7) mit dem Dämpfungselement (2) lösbar verbunden ist.

6. Leine für Tiere nach einem der vorhergehenden Ansprüche, **dadurch gekennzeichnet, dass** das Dämpfungselement (2) eine Gummistange (3) ist.

7. Leine für Tiere nach Anspruch 6, **dadurch gekennzeichnet, dass** sie Befestigungsvorrichtungen (6) beinhaltet, die an den Enden der Gummistange (3) angebracht sind, und Verbindungselemente (11), die mit den Befestigungsvorrichtungen (6) verbunden sind.

8. Leine für Tiere nach Anspruch 7, **dadurch gekennzeichnet, dass** sie Ösenbildungen in Form von Bügeln (9, 10) aufweist, die jeweils eines der Verbindungselemente (11) mit einem anderen der Verbindungselemente (11) der Befestigungsvorrichtungen (6) verbinden.

9. Leine für Tiere nach Anspruch 7 oder 8, **dadurch gekennzeichnet, dass** die Verbindungselemente (11) die Form von Karabinerhaken (12) aufweisen.

10. Leine für Tiere nach einem der Ansprüche 1 bis 6, **dadurch gekennzeichnet, dass** das Dämpfungselement (2) und die Schutzhülse (5) Ösenbildungen in Form von Schlaufen (90, 100) an ihren Enden aufweisen.

11. Leine für Tiere nach einem der vorhergehenden Ansprüche, **dadurch gekennzeichnet, dass** sie eine einziehbare Leinenhalterung (14) beinhaltet, die so ausgebildet ist, dass das Dämpfungselement (2) und die Schutzhülse (5) beim Einziehen in der Halterung (14) aufgenommen sind.

12. Leine für Tiere nach einem der vorhergehenden Ansprüche, die in Form eines Halsbandes für Tiere (21) ausgebildet ist.

## Revendications

1. Laisse pour animal comprenant un élément amortisseur (2) destiné à absorber les secousses, l'élément amortisseur (2) étant entouré d'un manchon de protection (5), **caractérisée en ce que** le manchon de protection (5) est une bande à mâcher, qui est constituée d'un matériau souple, résistant au mordillage, et **en ce que** le manchon de protection (5) a une longueur telle que l'élément amortisseur (2) est complètement recouvert par le manchon de protection (5) lorsqu'il est soumis à une force de traction.

2. Laisse pour animal selon la revendication 1, **caractérisée en ce que** la bande à mâcher (4) est faite d'une matière plastique extensible, tressée.

3. Laisse pour animal selon la revendication 1 ou 2, **caractérisée en ce que** l'élément amortisseur (2) est fait d'un matériau déformable élastiquement.

4. Laisse pour animal selon l'une quelconque des revendications précédentes, **caractérisée en ce que** l'élément amortisseur (2) est entouré par le manchon de protection (5) lorsque l'élément amortisseur est dans une condition relâchée.

5. Laisse pour animal selon l'une quelconque des revendications précédentes, **caractérisée en ce que** le manchon de protection (5) est relié de manière amovible à l'élément amortisseur (2) à une extrémité (7) du manchon de protection (5).

6. Laisse pour animal selon l'une quelconque des revendications précédentes, **caractérisée en ce que** l'élément amortisseur (2) a la forme d'une barre de caoutchouc (3) .

7. Laisse pour animal selon la revendication 6, la laisse étant **caractérisée en ce qu'**elle comprend des pattes de fixation (6) assujetties aux extrémités de la barre de caoutchouc (3) et des éléments de connexion (11) reliés aux pattes de fixation (6).

8. Laisse pour animal selon la revendication 7, la laisse étant **caractérisée en ce qu'**elle comprend des oeillets sous la forme de manilles (9, 10), qui relient chacune l'un des éléments de connexion (11) à une patte (6) différente.

9. Laisse pour animal selon la revendication 7 ou la revendication 8, **caractérisée en ce que** les éléments de connexion (11) ont la forme de crochets mousquetons (12).

10. Laisse pour animal selon l'une quelconque des revendications 1 à 6, **caractérisée en ce que** l'élément amortisseur (2) et le manchon de protection (5) forment des oeillets sous la forme de boucles (90, 100) à leurs extrémités.

11. Laisse pour animal selon l'une quelconque des revendications précédentes, la laisse étant **caractérisée en ce qu'**elle comprend un organe de retenue de laisse rétractable (14) configuré de manière que l'élément amortisseur (2) et le manchon de protection (5) soient reçus au sein de l'organe de retenue (14) une fois celui-ci rétracté.

12. Laisse pour animal selon l'une quelconque des revendications précédentes, la laisse se présentant sous la forme d'un collier (21) d'animal.
